Europäisches Patentamt

European Patent Office

Office européen des brevets

(19)

(11) **EP 1 467 218 A2**

(12) **EUROPEAN PATENT APPLICATION**

(43) Date of publication:
**13.10.2004 Bulletin 2004/42**

(51) Int Cl.[7]: **G01R 33/09**

(21) Application number: **04075958.1**

(22) Date of filing: **20.06.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK**<br><br>(30) Priority: **29.06.2001 US 301786 P**<br>**02.10.2001 US 969946**<br><br>(62) Document number(s) of the earlier application(s) in accordance with Art. 76 EPC:<br>**02739939.3 / 1 425 542**<br><br>(71) Applicant: **TPL, Inc.**<br>**Alberquerque, NM 87109 (US)** | (72) Inventors:<br>• **Tiernan, Timothy C.**<br>**West Newton, MA 02465 (US)**<br>• **Jarratt, Raymond L. Jr.**<br>**Los Lunas, NM 87031 (US)**<br>• **Summers, Stephen D.**<br>**Albuquerque, NM 87106 (US)**<br><br>(74) Representative: **Van Breda, Jacobus**<br>**Octrooibureau Los en Stigter B.V.,**<br>**Weteringschans 96**<br>**1017 XS Amsterdam (NL)**<br><br>Remarks:<br>This application was filed on 26 - 03 - 2004 as a divisional application to the application mentioned under INID code 62. |

(54) **Ultra sensitive magnetic field sensors**

(57)    A magnetic sensor and magnetic field sensing method for ordnance, comprising locating a magnetore- sistance detector within the ordnance and detecting magnetic fields with the detector. Also other sensing method and sensors employing such detectors.

*FIG. 1*

EP 1 467 218 A2

**Description**

CROSS-REFERENCE TO RELATED APPLICATIONS

This application is a continuation-in-part application of U.S. Patent Application Serial No. 09/969,946, entitled *ULTRA SENSITIVE MAGNETIC FIELD SENSORS,* to Timothy C. Tiernan, et al., filed on October 2, 2001, which is a continuation-in-part application of U.S. Patent Application Serial No. 09/265,991, entitled *INTEGRA TED MAGNETIC FIELD SENSORS FOR FUZES,* to David W. Cutler, et al., filed on March 9, 1999, issued on October 2, 2001, as U.S. Patent No. 6,295,931, which claimed the benefit of the filing of U.S. Provisional Patent Application Serial No. 60/077,525, entitled *SENSITIVE INTEGRATED MAGNETIC FIELD SENSORS FOR FUZES,* filed on March 11, 1998; and of U.S. Provisional Patent Application Serial No. 60/092,717, entitled *SENSITIVE INTEGRA TED MAGNETIC FIELD SENSORS FOR FUZES,* filed on July 14, 1998; and the specifications thereof are incorporated herein by reference.
This application also claims the benefit of the filing of U.S. Provisional Patent Application Serial No. 60/301,786, entitled *ULTRA SENSITIVE MAGNETIC FIELD SENSORS,* filed on June 29, 2001, and the specification thereof is incorporated herein by reference.

BACKGROUND OF THE INVENTION

Field of the Invention (Technical Field):

The present invention relates to sensors made of giant magnetoresistance materials (GMR), colossal magnetoresistive (CMR) materials, or anisotropic magnetoresistive (AMR) materials. The terms magnetoresistance and GMR, as used throughout the specification and claims, are intended to include giant, colossal, and anisotropic magnetoresistance or magnetoresistive materials.

SUMMARY OF THE INVENTION (DISCLOSURE OF THE INVENTION)

The present invention is of a magnetic sensor and magnetic field sensing method for ordnance, comprising locating a giant magnetoresistance detector within the ordnance and detecting magnetic fields with the detector. In one embodiment, turns of spinning ordnance are counted, with autonulling being employed, such as injecting a charge into a circuit comprising the giant magnetoresistance detector, the charge injection being triggered upon exit or when a rate of spin of the ordnance exceeds a predetermined rate. In another embodiment, ordnance is armed a predetermined time after exit of the ordnance from a weapon firing the ordnance, which can involve one or more of the following: determining exit of the ordnance from a weapon firing the ordnance (preferably by detecting concentrated earth's magnetic field lines at an opening of a weapon firing the ordnance), determining exit velocity, determining proximity to metallic targets, and determining direction to metallic targets. Turns count and other information can be programmed into the sensor using an inductive programmer or other approach, using data from the targeting system of the munitions delivery system, to enable programming of the sensor just before it is fired. In another embodiment, incoming munitions are detected either through purturbation of the earth magnetic field, or by their intrinsic magnetic properties, such as by employing a biasing magnet, employing an oscillation frequency, employing a coil proximate the exterior or nose of the ordnance, employing multiple detectors and triangulation means, and/or employing an array of detectors. The detector is preferably fabricated on a printed circuit board, hybrid circuit, or integrated circuit. The sensor can also perform one or more of the following functions: outputting a signal characteristic of impact of the ordnance, employing a map of local magnetic fields to determining position and direction of an object, detecting flying objects by looking for response to an emitted magnetic field, and determining eddy currents output by flying object traversing earth's magnetic field.
The present invention is also of a magnetic field sensor and sensing method for locating defects in objects in two or three dimensions, comprising providing to a sensor a giant magnetoresistance detector and traversing the sensor over an object. In the preferred embodiment, one or more of the following functions are performed: measuring induced or intrinsic magnetic fields to determining type of defect, determining volume lost to defect, determining depth of defect, imaging the defect, determining dimensions of defect, and producing Lissajous plots of amplitude versus phase for magnetic fields.
The present invention is further of a magnetic field sensor and sensing method for medical imaging, comprising providing to a sensor a giant magnetoresistance detector and traversing the sensor over a patient. In the preferred embodiment, one or more of the following functions are performed: measuring electromagnetic activity in the patient's heart, measuring electromagnetic activity in the patient's brain, performing biomagnetics analysis, performing nuclear magnetic resonance imaging, and imaging skin defects or tissue anomolies.

The invention is additionally of a magnetometer and magnetometry method comprising providing a giant magnetoresistance detector and operating the detector. In the preferred embodiment, one or more of the following functions are performed: detecting conductive materials on a surface, detecting conductive materials beneath a surface, detecting conductive materials in a body of liquid, locating naval vessels, detecting electrical currents flowing through printed circuit board traces, detecting electrical currents flowing through integrated circuit components, measuring amplitudes of electrical currents, and detecting breaks in electrical conductors. Operation may be in DC detection mode or employing oscillating magnetic fields or ambient fields.

The present invention is also of a magnetic field sensing system and method for locating defects in objects in two or three dimensions, comprising providing a sensor comprising a magnetoresistance detector and sensing at a plurality of frequencies. In the preferred embodiment, defects at a plurality of depths in the objects (e.g., printed circuit boards) are sensed.

The invention is further of a magnetic field sensing system and method for imaging objects, comprising providing a magnetoresistance detector, employing means for non-magnetic imaging, and analyzing images produced by both the magnetoresistance detector and the means for non-magnetic imaging. In the preferred embodiment, the means for non-magnetic imaging comprises optical imaging means.

The invention is additionally of a system and method for mechanical system identification, comprising providing a magnetoresistance detector and using the detector to sense characteristics of a passing mechanical system. In the preferred embodiment, the passing mechanical system is a vehicle. Output of the magnetoresistance detector is analyzed and compared to known characteristics of one or more of the following: perturbations of the earth's field by a moving metallic object or vehicle; fields associated with electric motors; fields associated with generators and alternators; fields associated with spark plugs, wires and coils; fields related to rapidly moving metallic parts; and fields associated with large masses of metals. Preferably at least three magnetoresistance detectors are employed. The detector can detect perturbations of the earth's magnetic field by the mechanical system, magnetic fields generated by electromagnetic components of the mechanical system, and/or radio waves generated by the mechanical system.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

BRIEF DESCRIPTION OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more preferred embodiments of the invention and are not to be construed as limiting the invention. In the drawings:

Fig. 1 is an electrical schematic of the preferred spinning round sensor of the invention;

Fig. 2 is a diagram of a circuit board incorporating the sensor of the invention;

Fig. 3 is a graph showing signal pulse upon exit from a mortar tube of a munition incorporating the sensor;

Fig. 4 illustrates the sine wave detected by the sensor as generated by the rotation of a munition, with each cycle being equivalent to one rotation of the munition;

Fig. 5 is an electrical schematic of the barrel exit detection embodiment of the invention, useful with mortars and non-rotating rounds;

Fig. 6 is a perspective view of a data logger PCB incorporatable into a 40 mm round for testing purposes;

Fig. 7 is a front perspective view of a round incorporating data logger and sensor PCBs just before final assembly;

Fig. 8 is a block diagram of a system useful in arming a device according to the invention and collecting data from an on-board data acquisition system;

Fig. 9 illustrates a conditioned signal output by the data logger PCB, each square wave transition corresponding to one revolution of the 40 mm round;

Fig. 10 illustrates use of the sensor of the invention within a counter munition;

Fig. 11 is a perspective view of a handheld NDE unit including graphical modes that can resolve defects to a depth of more than 0.4" in 6061T6;

Fig. 12 is a top view of a 196-element tunnel junction imaging array;

Fig. 13 is an 11 kHz C-scan of first and second layer rivet heads in an aluminum sheet metal section simulating an aircraft wing;

Fig. 14 shows 100 micron wide cuts in an aluminum sheet metal sample;

Fig. 15 is an APET image of a 10% mass loss corroded region measured through 60 mils of aluminum, made from the side opposite the corrosion;

Fig. 16 illustrates use of the sensor of the invention for guidance of a munition according to the invention to an under-sea mine;

Fig. 17 is a top view of a 14 X 14 element array of GMR sensors produced on a single substrate, each element being approximately 10 X 10 microns;

Fig. 18 is output from a two-dimensional GMR sensor array according to the invention showing variations in magnetic field strength over an area of metal; and

Fig. 19 is a block diagram of a system according to the invention used for non-destructive evaluation of a sample.

DESCRIPTION OF THE PREFERRED EMBODIMENTS (BEST MODES FOR CARRYING OUT THE INVENTION)

Magnetic Field Sensors For Munitions

The present invention is directed to an advanced, giant magnetoresistive (GMR) based sensor platform for detection of spin rate and muzzle exit, muzzle exit velocity, range, proximity, attitude, and/or guidance of munitions from within the fuze assembly of an advanced munition. The sensor can operate with both rotating rounds such as a 40 mm rotating round or with non-rotating rounds such as a 60mm mortar. The invention can also operate with finned munitions. The sensor can be programmed at the time of firing using induction programming techniques or similar programming technology to cause the fuze system to activate based on data obtained from a targeting system.

Extensive shock and thermal testing was employed to verify the robustness of the sensor. The sensor and support electronics were transferred to a production board package in order to provide single board sensors for turns counting or barrel exit sensing. Live-fire tests were successfully completed for a 40 mm rotating round. The tests were successful and showed that it is possible to monitor barrel exit, rotations, velocity, and range all with a single ambient field sensor. The results showed that the sensor was able to provide data that can monitor munition flight distance with an error of less than 1% (0.84%). Evaluations of barrel exit detection, tolerance of mechanical shock, and environmental durability of the sensors were also positive using an 60 mm mortar tube.

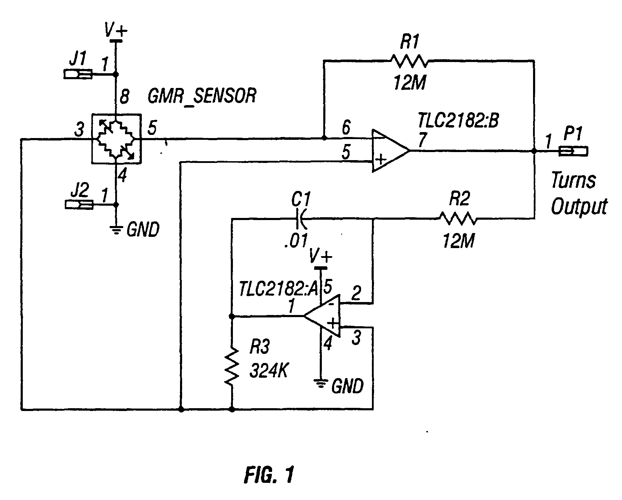

The preferred spinning round circuit design is as follows, including an autonulling capability (see Fig. 1). Upon setback or alternately as soon as the sensor begins to spin at a rate above a few Hz, the circuit injects a small charge into the sensor to compensate for any polling (due to large magnetic field exposure) that has taken place during storage of the sensor or munition. The rate of rotation for activation is high enough that it will not null the sensor if the munition is dropped or rolled during handling. When fired, the rotation due to rifling of the gun barrel makes the sensor spin at a sufficient rate, while the sensor is still in the barrel of the gun, to activate the autonulling. This ensures that the sensor is biased properly to detect barrel exit when it is fired, and begin counting turns when the munition exits the barrel.

The circuit automatically nulls the GMR sensor during power-up. This compensates for any residual magnetization that may have occurred due to close proximity of the sensor to large magnetic fields.

The circuits are preferably built on printed circuit boards (PCB), which offer low power operation in a small enough package to meet the demands of both 40 mm rounds and 60 mm mortars. Circuits built this way are much less expensive to design layout, build and test, than are circuits made with hybrid techniques. However, hybrid circuits may be used where a smaller package is needed.

Shock testing was performed prior to firing the 40 mm test rounds. The sensor and electronics system were unaffected by exposure to shock. During live fire tests with 40 mm rounds the sensor and electronics withstood the shock with no failures or any signs of damaging effects.

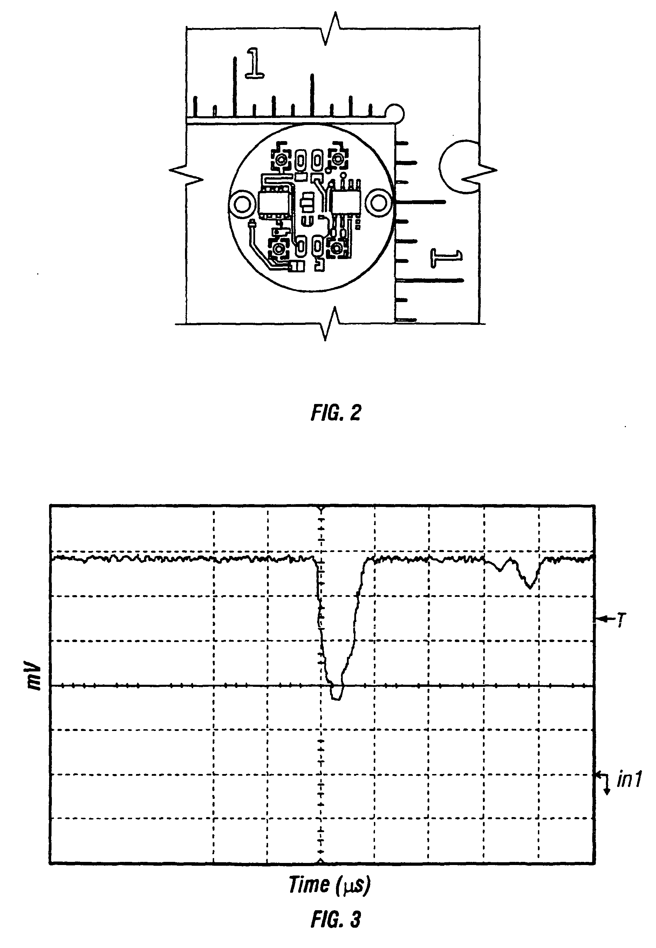

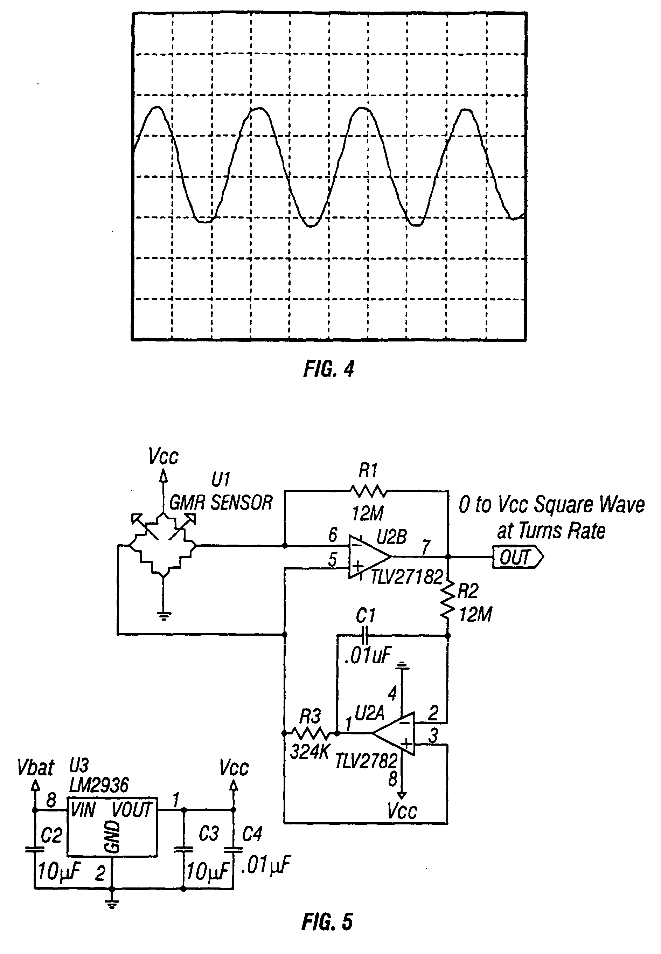

The present invention can also measure barrel exit time and barrel exit velocity for mortars. Using techniques and sensors made from giant magnetoresistance materials (GMR), highly durable, low power sensors detect barrel exit in both 60 mm mortars, and 40 mm spinning rounds (Figures 2 and 5). Larger diameter mortars (e.g., 80 mm and 120 mm) require that the sensor have the ability to dependably detect the edge of the mortar tube using a passive approach such as measuring the earth's magnetic field concentration at the edge (exit) of the mortar, or using an active mode, for example, a small permanent magnet mounted on the end of the mortar tube having a large distance between the sensor and the edge of the mortar tube. Laboratory tests with larger diameter mortars indicate that the invention can measure both exit time and exit velocity in these munitions.

The present invention also provides an advanced magnetic safing and arming (S&A) sensor technology based on giant magnetoresistive sensors. Extensive tests, including live fire tests with 40 mm munitions were performed with both turns-counting and barrel-exit sensing configurations for rotating rounds. The present invention includes non-rotating rounds, specifically 60 mm mortars. The sensors survived repeated mechanical shock tests in excess of 100,000 gs and environmental cycling ranging from 150 C to -180 C.

Tunnel-junction or spin valve GMR sensors with a resistance change of 7-15% in a 2 Oe magnetic field applied perpendicular to the easy axis of the device have been used. In general, high sensitivity to magnetic field is desirable The sensor sizes used range from 0.4 mm x 1 mm to 10μm x 10μm. The device impedance used ranged from 100 Ω to 10 kΩ but other device impedances can be used depending on the application. In general high impedance (ohms per square) helps reduce the size of the sensor, and this saves power and reduces the size of the sensor. The bandwidth of the sensor used was >1 Ghz, making it capable of detecting extremely rapid changes in magnetic fields. Power consumption of the sensor and support electronics is has been shown to be approximately 1 milliamp at 3 volts for the spinning round sensor. Power requirement will vary depending on the sensors and circuitry needed for each application. The size of the sensor and its support electronics, mounted on a standard printed circuit board, is not an impediment since the entire assembly easily fits inside a 40 mm round or a 60 mm mortar fuse well without the need for modifications to the munition. If a smaller sensor system is needed the sensor and circuit can be fabricated as a hybrid integrated circuit, greatly reducing the physical size of the sensor device.

In one embodiment, the sensor operates by detecting the magnetic field of the earth. In the case of a mortar round, the local field gradient is concentrated by the metal mortar tube. Inside the tube there is little or no magnetic field. At the opening of the mortar tube, the earth's magnetic field lines are concentrated by the edges of the mortar tube, resulting in a relatively strong field. When the mortar is fired, the sensor does not respond until it passes the end of the mortar tube where it detects the concentrated magnetic field. The sensor outputs an electrical pulse that can be used as a trigger to mark barrel exit, and arm the mortar (Fig. 3).

In the case of a rotating round, the sensor is mounted such that it spins along with the munition. As it spins, its sensitive axis cycles from alignment with the earth's magnetic filed, to nonalignment. This results in the sensor outputting a variable amplitude sine wave corresponding to one revolution of the munition (Fig. 4). Since the rifling dimensions for the gun from which the sensor is fired are known, it is possible to detect barrel exit, speed and range of the munition.

The sensor of the present invention has a wide range of uses including barrel exit and velocity for mortars. It can also be used for trajectory measurements and proximity to metallic targets for non-rotating rounds. The sensor system has highly desirable characteristics including: extremely small size, low power operation, high shock resistance, wide temperature range, and extremely fast response time. Its operation is based on the earth's magnetic field making it highly reliable and independent of other system such as GPS. The sensor system benefits munitions programs by offering a high performance low cost alternative for arming and safing applications for both non-rotating and rotating munitions.

Design of the Barrel Exit Sensor and Circuitry for a 120 mm Mortar

Accurate barrel exit detection is related to the ambient noise level, signal state separation, and sensor bandwidth. The sensor output when in the mortar tube compared to sensor output during barrel exit is sufficient reliable barrel exit detection. If the sensor bandwidth is much smaller than the event bandwidth both event detection and timing accuracy are degraded. Bandwidth, and signal output while inside the mortar tube do not pose problems. The sensor can detect the threshold of the mortar tube where the earth's magnetic field is concentrated by the metal mortar tube.

Several techniques can be used to increase detection capability and reliability:

- Using the same sensors described above for a 60 mm mortar, determine if there is sufficient sensitivity to detect barrel exit. If not, refine the gain and frequency response of the circuitry to improve performance as needed.
- Use a more sensitive sensor and/or sensor arrays with extremely high sensitivity.
- Use a number of offset sensors each oriented in a different direction to determine if any one of them or any combination of them detect the concentrated field at the mouth of the mortar tube. This array of sensor can be read in a logical mode (e.g., AND, OR) to increase the detection capabilities and reliability of the sensor configuration.

- Use permanent magnet in conjunction with the sensor. For example, a permanent magnet may be placed at the end of the mortar tube where the field would be detected by the sensor(s) as the munition exits the mortar tube.

The preferred barrel exit circuitry (see Fig. 5) is preferably similar to the electronics developed and tested for mortar exit and spinning rounds. In its simplest form, the circuit has a self-nulling capability so that when it is activated by powering the sensor, the bias point of the sensor is set to the center of its full range output. The circuit will then continuously compare the real-time output of the sensor to a preset voltage that corresponds to the output of the sensor under low magnetic field conditions.

When the sensor (and mortar) exit the mortar tube, the sensor detects the earth's magnetic field concentrated at the mouth of the launch tube (barrel). When the sensor detects the magnetic field concentration, its output causes the on-board detection circuitry to cross a preset comparison voltage. To accomplish the same goal, the sensor may also detect permanent magnets mounted at the end of the launch tube. This results in a high-speed digital pulse that is used to trigger the fuzing system. If two sensors are used with a known distance between the sensors, then the speed of the munition can be determined at barrel exit. This information can be used for range analysis and compensation due to weather, wind, or other conditions. Additional filtering circuitry may be used so that the sensor amplifier responds only to high frequency pulse characteristic of high-speed barrel exit. This helps eliminate noise and other spurious signals due to set back, permanent magnetic fields in the mortar tube, and accidental dropping of the mortar round or low speed exit (misfire).

The barrel exit sensors of the invention preferably use standard printed circuit board (PCB) techniques utilizing SIOC packaged ICs, and chip capacitors and resistors.

The barrel exit sensors of the invention were evaluated using both a drop tower and a simulation station. The drop tower consists of a metal tube made of materials and dimensions similar to a 120 mm mortar tube. Alternatively, a modified 120 mortar tube may be used. The test apparatus allowed for mechanical acceleration to achieve high velocities for meaningful testing of the barrel exit sensor.

The simulation test station was based on using an arbitrary waveform generator, coupled to a discharge-capacitor driven current source to simulate the transient of a much faster barrel exit than that achievable using a drop tower configuration. In principle this simulation station accurately reproduce the magnetic field perturbation of a gun barrel exit at speeds in excess of 5,000 m/s, a velocity actually achieved by some munitions such as the kinetic energy rod. This velocity is well within the bandwidth limitations of the sensor of the present invention.

60, 80, and 120 mm mortar tubes were tested. Barrel exit detectability was enhanced for the larger mortar tubes by improving the sensor and circuitry specifically for the larger mortar by using flux guides, optimized geometry and signal processing techniques. The sensor was able to detect the edge of the larger mortar tubes during barrel exit under simulated conditions.

Programs were performed related to GMR sensors for applications in both safing and fuzing, and in the use of GMR sensors and sensor arrays for nondestructive evaluation. In the area of safing and fuzing it was shown that the sensor can be used to detect revolutions in a 40 mm round during live fire testing. The sensor provided information that enabled an on-munition system to determine barrel exit, munition velocity, and range.

Tests with mortars were conducted. A sensor was made that was able to detect barrel exit in a 60 mm mortar. Live fire tests confirmed the utility of the sensor. In addition to sensor and circuit design, mechanical shock testing, and environmental testing were performed with good results.

Signal conditioning and readout electronics were also developed. This resulted in tunnel junction GMR sensor arrays for NDE. The sensor elements developed were only 10 microns on a side, yet delivered 7% ($\Delta R$ in a 2 Oe field with nominal resistance near 10 k). Signal conditioning and readout electronics for the sensors were also developed.

<u>Sensors for Fuze Applications</u>

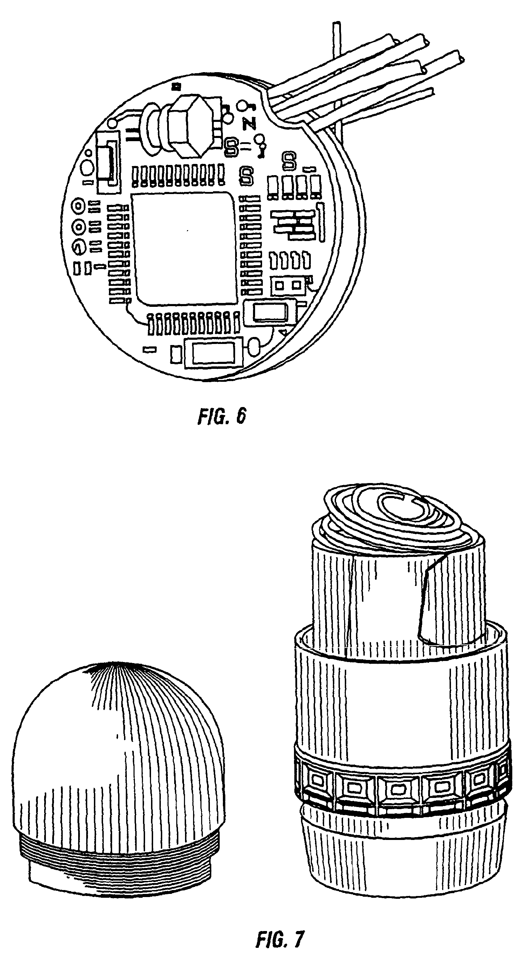

As described previously, the present invention provides technology to measure barrel exit, spin velocity, and range using GMR sensors detecting the earth's magnetic field. Sensor systems were fabricated for live-fire testing. Tests with the 40 mm spinning round were done. Three (3) data recorder/spin sensor assemblies were fabricated, tested and potted into 40mm back shells. Each final potted test unit was numbered 1, 2 and 3. Once the operation of the data recorder and spin sensor were individually functionally verified, the two PCBs were interconnected and tested (assembly shown in Figs. 6 and 7).

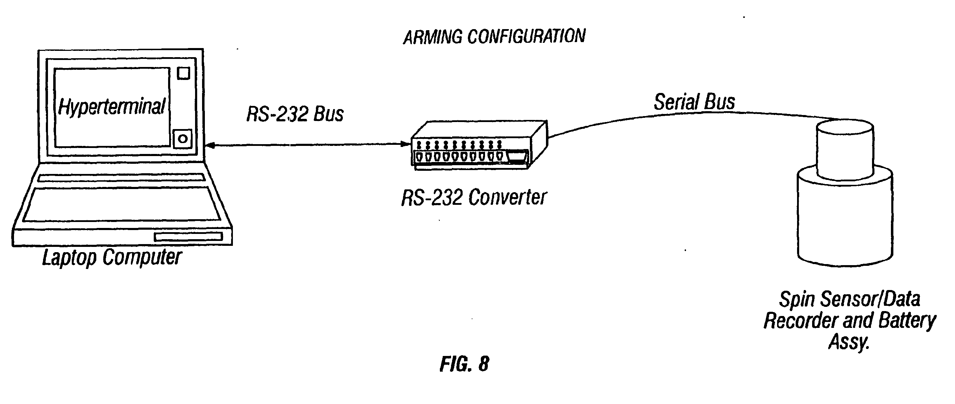

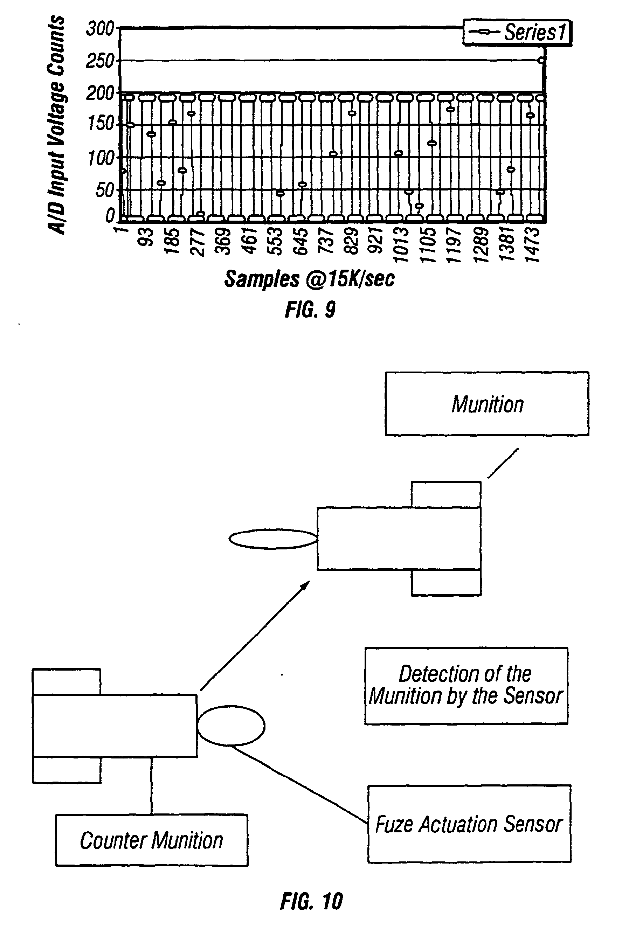

Prior to triggering and recording, the data recorder was powered and armed. This was accomplished through a 7.5v battery or power supply source, laptop computer and an RS-232 interface. This setup is shown in Fig. 8. The computer communicates to the data recorder through the RS-232 interface and cable. The data recorder microprocessor firmware program is a self-contained program that performs BIT functions, arming, data upload, sampling rate and record time selection. The computer used the Windows program "Hyperterminal" to communicate with the data recorder. This program provides communication with the data recorder for operator parameter entry as well as data upload "receive text file" mode to upload the data from the data recorder to a file on the hard disk. This text was then imported to "Excel" to plot the data to a graph (see Fig. 9).

Flight Distance Calculations During Field Testing

$$\text{Predicted Flight Distance} == \text{Muzzle Velocity} * \text{Flight Time} = 831 * 0.25 = 207.75 \text{ ft}$$

$$\text{Turns Calculated Flight Distance} = \# \text{ of Turns} * 4 \text{ ft/Turn} = 51.5 * 4 = 206.0 \text{ ft}$$

$$\% \text{ Error} = ((\text{Predicted Flight Distance} - \text{Turns Calculated Flight Distance}) /$$

$$\text{Predicted Flight Distance}) * 100 = ((207.75 - 206)1207.75) * 100\% = 0.84\%$$

Safing and Arming Sensor - Counter Munitions

The present invention also relates to advanced magnetic safing and arming (S&A) sensor technology based on giant magnetoresistive (GMR) sensors (see Fig. 10). The counter munition would initially be guided by radar which would also sense the munition. Once the counter munition neared its target the GMR sensor(s) would pinpoint its location and set the needed time delay on the fuze for maximum destructive power to the target. The present invention provides a sensor that can detect incoming munitions such as the KE rod or TOW missile. The sensor provides proximity information that is used by ISP to destroy the incoming munition before it reaches its target (e.g., a tank).

The sensor is mounted in the nose of the counter munition. It senses the local field strength. When nearing an incoming munition, it detects a change in the magnetic field strength due to permanent magnetic fields generated by ferromagnetic metal in the munition. It also detects the change in the Earth's magnetic field due to the variations in the field lines caused by metal in the munition. Changes in field strength detected by the sensor provides the proximity information needed to detonate the counter munition at the most advantageous time

One approach to increase sensitivity is to place a permanent magnet near the sensor as a biasing magnet. As the sensor approaches the metallic munition, the bias point changes due to the ferromagnetic metal in the munition.

An active sensor with an oscillation frequency selected for the type of munition can be used. The sensor is inductively programmed at the time of counter munition launch for the type of incoming munition, based on radar information from the ISP system. A coil wrapped around the nose or any surface of the counter munition emanates an electromagnetic frequency selected for the type of incoming munition. The magnetic field properties generated by the coil change as the counter munition nears its target, thus providing the information needed for optimum detonation of the counter munition.

In all of these cases, multiple sensors can be used for triangulation. This increases angular sensitivity, and provide more detailed information about the incoming munition which can be used to enhance the performance of the counter munition.

The sensor preferably has the following properties:

Reponse time: 1 ns
Bandwidth: > 1 GHz
Signal to noise ratio: depending on application CAN be >1000
Power consumption: -3V at 2mA for passive sensor
Field of view: 3600
Environmental ruggedness: The sensor and circuit on a PCB have been tested to 100,000g in live fire tests of rotating rounds; temperature tolerance of sensor has been demonstrated at-1800 C to +1500 C
Size and weight: Current fuze circuit and sensor fit on round PCB 25 mm diameter that weighs 1.8 grams. Could be smaller as a hybrid circuit. Actual sensor is approximately 100 x 100 microns.

The sensor technology has a wide range of uses including barrel exit and velocity for mortars, and range for spinning rounds. It also can be used for trajectory measurements and proximity to metallic targets. The sensor system has highly desirable characteristics including: extremely small size, low power operation, high shock resistance, wide temperature range, and extremely fast response time. Its operation is based on the local magnetic fields, making it highly reliable and independent of other system such as GPS. The sensor system benefits munitions programs by offering a high-performance, low-cost alternative for arming and safing applications for both non-rotating and rotating munitions.

Targeting Sensor

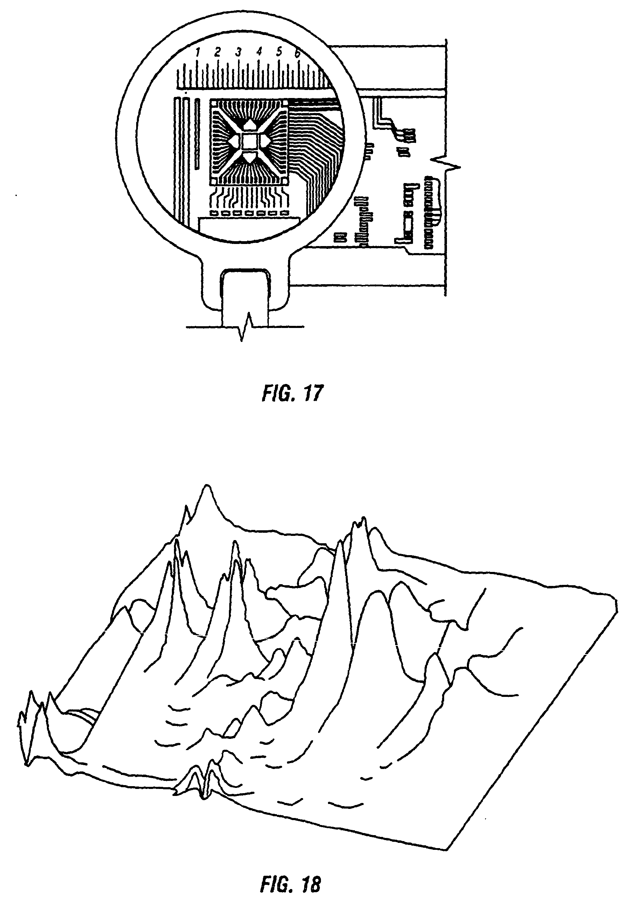

The present invention also provides a targeting sensor. It uses a single sensor or an array of sensors (see Fig. 17). The sensors provide information regarding the location and/or proximity of the munition to its target. Relative signal strengths and frequency responses are used to identify types of targets for positive identification or IFF (identification friend or foe).

Medical Imaging Sensor

This type of sensor or sensor array can also be used in the medical field. For example, it can be used to measure electromagnetic activity in the heart or brain. It can be used as a sensor in the field of biomagnetics. It can also be used in nuclear magnetic resonance imaging. The ability of the sensor to detect magnetic fields in a single plane or line makes it suitable for use in imaging skin defects or tissue anomalies. It can also be used for imaging low volume point defects. The small signals from small volume defects can be extremely difficult to detect using standard NMR imaging because the signals from the small volume area are overshadowed by those from larger volume areas which contain more hydrogen, and therefore produce larger signals.

Target Identification

There are many different types of magnetic information produced by vehicles and like mechanical systems, all of which can be used to accurately identify and characterize the source of the field. Among these sources are: perturbations of the earth's field by a moving metallic object or vehicle; fields associated with electric motors; fields associated with generators and alternators; fields associated with spark plugs, wires and coils; fields related to rapidly moving metallic parts such as cooling fans, gears and motor parts; fields associated with large masses of metals such as boat hulls, mines, trucks, aircraft, and tanks. Each source will produce characteristic amplitudes, frequencies and periodicity related to the layout of vehicle and its speed when passing the sensor. By using an integrated approach to the analysis of the all the different types of magnetic fields generated, there will be considerable information available for accurate determination of the type of source and level of threat.

Vehicle Analysis and Differentiation

In the case of passive detection of the perturbations in the earth's magnetic field caused by a moving metallic object (vehicle), the resulting magnetic signature is produced by the shape and metallic composition of the vehicle. For example, the x, y and z components of the magnetic signature of a moving object can be detected by sensors buried underneath the surface of a road or beneath the surface of a body of water. In the case of a road, at the surface of the road, the magnitude of the magnetic field produced by a vehicle will be approximately the same as the earth's magnetic field or -0.5 Oe. The sensor must have sensitivity that is high enough to measure magnetic fields that could be at or below the earth field. This calls for high sensitivity at low frequencies (slow moving vehicles will produce field information down to 1 Hz.). Sensors according to the present invention offer a signal to noise ratio of ~20,000 at 0.5 Oe and 1 Hz. This type of sensor has both the sensitivity and low noise characteristics required for the measurement of the small magnetic fields that will be encountered by the buried sensors.

Using three sensors and vector analysis, it is possible to obtain three-dimensional information concerning length, width and height of the vehicle. Wide vehicles such as tanks produce a much larger y component response compared to a thinner automobile or bus. The amplitude of the signal provides information concerning the metallic composition of the vehicle. For example a bulldozer, tank, or armored personnel carrier would contain more steel than an auto or school bus. Another approach is to determine the distance between the front of the vehicle and the first axle, or simply counting axles.

Sensor arrays are preferred to enhance the ability of the system to characterize the vehicle. For example, it is possible to analyze strips of information. The additional sensors also improve the amount of data available so that statistical analysis can be used to effectively reduce noise and increase vehicle confirmation accuracy.

To supplement the information produced by the perturbation of the earth's field, several other magnetic field sources are preferably examined. In the case of magnetic fields emanating from generators, electric motors, and fast moving mechanical parts, the frequency, field amplitude and position of the source in the vehicle can be used to identify the vehicle. These sources will generally have higher frequencies than the perturbation of the magnetic fields. This difference in frequency will allow the sources to be separated for individual analysis. The field magnitude may also be much larger due to the high currents and/or voltages produced. This type of analysis can provide information such as the number of motors, how large they are, where they are located, and what their power output is. All of this provides valuable information for vehicle characterization.

Moving mechanical components such as fans, gears, and moors parts will also provide magnetic field information. Again, frequency and amplitude information are likely to be differentiated from other components of the vehicle. In general, they will be higher frequency and lower noise than both the electrical components of the vehicle and the signals generated by electrical components. One can determine the distance of a cooling fan from the front of the vehicle or the number of gears on a flywheel. This sort of information will help detail the characteristics of the vehicle.

Another potentially overlooked information source inherent to many military and construction vehicles is its communication system. Devices such as radio and telephone produce significant amounts of high frequency electromagnetic information. One can detect radio waves using a sensor according to the present invention with high signal to noise ratio. One can both measure the frequency of the signal and possibly demodulate the signal and determine the content of the communication.

Obtaining all of this information requires a fast and highly efficient data collection scheme. Sensors according to the present invention used in conjunction with computerized data collection and analysis circuitry can operate at low power levels (-3mw when active) yet can collect data at 20 mHz. Such circuitry can fit on a printed circuit board about the size of a quarter dollar, and has been subjected to 100,000 g by firing on board a 40 mm round. It is preferred to include a power management capability to reduce power consumption to 0.3 microamps at 3 v by using one of the sensors, such as a seismic sensor, to activate the circuitry, permitting the magnetic field sensor system to remain functional for over ten years using a single coin cell battery.

Sensor integration will be an important aspect of a sensor system according to the invention. The information generated by several magnetic field sensors can be analyzed using several different techniques. Each sensor will produce information concerning field amplitude, frequency and position of the source. This independent information will provide information to decide the type of vehicle being scanned. It can also be used to compare to a magnetic field signature for known vehicles or types of vehicles. It can also be used as nodes in a neural network. In the case of biosensors, a neural network can be used to improve the selectivity of the array for molecular analysis. For magnetoresistance sensors, such analysis can be used to correlate frequency, amplitude and phase data to produce high spatial information, three-dimensional images of magnetic field sources.

A second aspect of sensor fusion is in improving power management and the functional lifetime of the sensor. One approach is to use data from the seismic sensors to activate the magnetic sensors. Another approach is activating the magnetic field sensors for a few microseconds each second (the sensors and circuit activate in ∼1 ns) to determine the presence of a threat, and the need to fully activate the entire system. The combination of the data output from the different types of sensors in the system will also improve the characterization of the vehicle and increase the probability of it being able to perform as desired.

Magnetoresistance Sensors and Sensor Arrays For Nondestructive Evaluation (NDE)

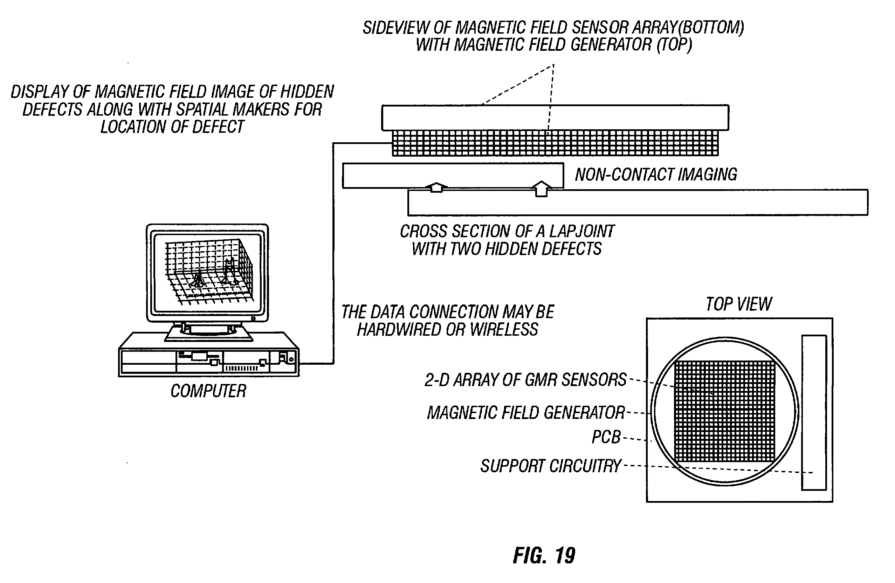

The magnetoresistance sensors and arrays of the present invention can also be employed for NDE of conductive components (see Fig. 19, sample results in Fig. 18). Sensors according to the present invention can be used to detect, scan, and image eddy currents in defective metallic components, such as sheet metal parts or pipe welds. This is particularly valuable for evaluation of items with small feature size such as printed circuit boards, flip chips, and printed circuit tapes. An array of sensors with dimensions on the order of 1 to 50 microns can detect defects that are micron-sized or smaller.

Because magnetic fields pass through materials it is possible to form three-dimensional images of materials. The depth of penetration of an induced magnetic field is dependant on field frequency and the electronic properties of the material. This phenomena will provide depth information at any given magnetic field induction frequency.

Using a variety of different frequencies enhances the ability to perform depth analysis. When evaluating objects such as printed circuit boards, images made at different frequencies will obtain data at various depths in the material. It is possible to use high frequencies to examine only the top layer(s) of the printed circuit board because at sufficiently high frequencies the field will not penetrate beyond the first layer of the printed circuit board. Lower frequencies will allow analysis deeper into the material. By collecting data at a variety of frequencies, it is possible to separate the upper layers of a material (or printed circuit board) from the lower layers. In this way depth analysis can be performed. For example, it would allow non-destructive evaluation of individual layers in a printed circuit board.

Tunnel junction GMR sensor arrays for NDE were developed. The sensor elements developed were only 10 microns on a side, yet delivered 7% (ΔR in a 2 Oe field with nominal resistance near 10 k). Signal conditioning and readout electronics for the sensors may also be employed. Other types of GMR and CMR sensors can also be used rather than the preferred tunnel junction type of GMR device. The source of the magnetic field may be induced eddy currents, electrical current flow through a trace, wire, or component, or another source.

U.S. Patent No. 6,150,809, entitled "Giant Magnetorestive Sensors and Sensor Arrays for Detection and Imaging of Anomalies in Conductive Materials" relates to magnetic and electromagnetic nondestructive evaluation. This technology is based on a synergistic combination of a traditional eddy-current coil or permanent magnet and a unique magnetic sensor based on a class of materials known as giant magnetoresistors. The result is a sensor exhibiting substantially higher field sensitivity and spatial resolution when compared with traditional methods. Since these sensors directly sense the magnetic field, rather than changes in the field as is the case for coils, they can be operated with high sensitivity at very low frequencies and even with DC generated fields.

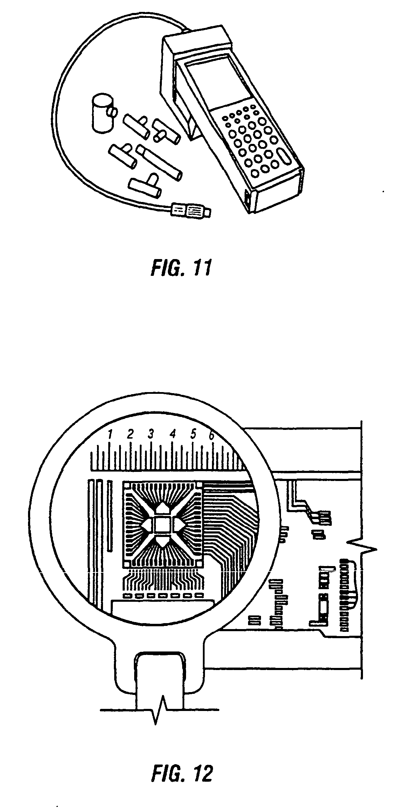

A handheld NDE instrument was developed. This system was able to detect third layer (0.065" 2024T3 per layer) cracks without the need for bench-top instrumentation. The present invention is a handheld NDE unit along with a variety of sensors as shown in Fig. 11. This unit provides four different graphical data display modes and is capable of resolving defects to a depth of approximately 0.2" using the smaller diameter probes and to a depth of approximately 0.4" using the larger probe.

Current GMR detectors include several configurations. Most are packaged using molded urethane. The process begins with a sensor, coil and flux focusing (if applicable) alignment on a metrology station. The aligned assembly, along with the electronics subsystem, sapphire wear surface and electrical connector, is then encased in color-coded urethane. This process provides a rugged and compact package for the sensor and eliminates costly machining.

The sensors are typically driven with a constant-current AC drive between 50 Hz and 25 kHz. At 1 kHz the 3/8" diameter sensors can easily resolve EDM cuts less than 0.25" in length through 0.195" of 2024T3. A larger, 3/4"version of this sensor has be used to image anomalies to over 0.4" in 6061 T6.

Two-dimensional imaging arrays of GMR elements have been designed and units have been fabricated. Functional arrays consisting of 196 tunnel-junction sensors (14 x 14). The individual sensors are only a few square microns in area and are positioned on a grid with a sensor-to-sensor spacing of approximately 210 microns. The active area of the entire 14 x 14 element array is less than 3 mm on a side (9 mm2). Fig. 12 shows a photo of one of the imaging array prototypes. In this photo the magnetic field generation has been removed. Large (4" x 4") arrays provide for real-time imaging of deeply imbedded defects and corrosion.

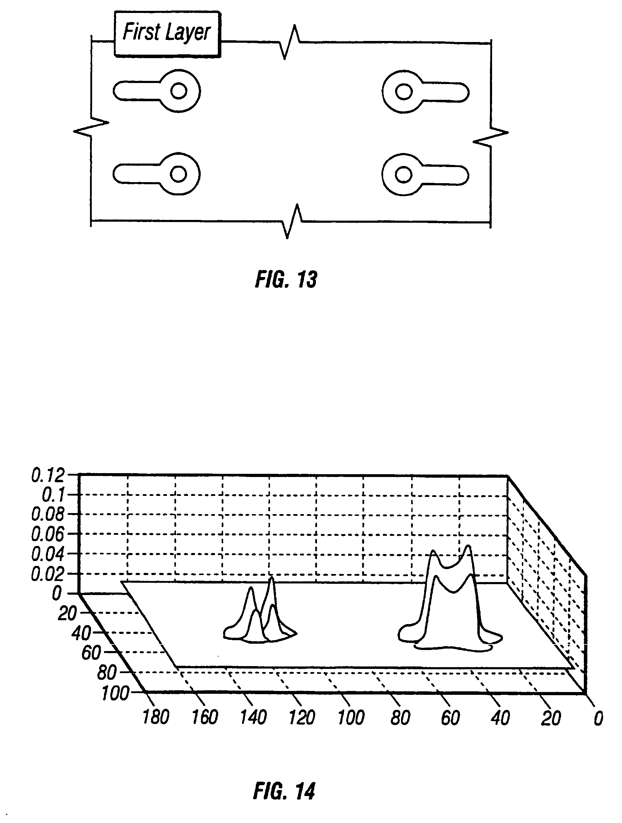

High resolution images of magnetic fields were obtained by performing raster scans of various test samples. Fig. 13 shows an 11 kHz scan of first and second layer rivet heads in an aluminum sheet metal section simulating an aircraft wing. Fig. 14 shows 100 micron wide cuts in an aluminum sheet metal sample. This data demonstrates the extremely high signal-to noise ratio obtainable with the GMR sensor technology of the present invention.

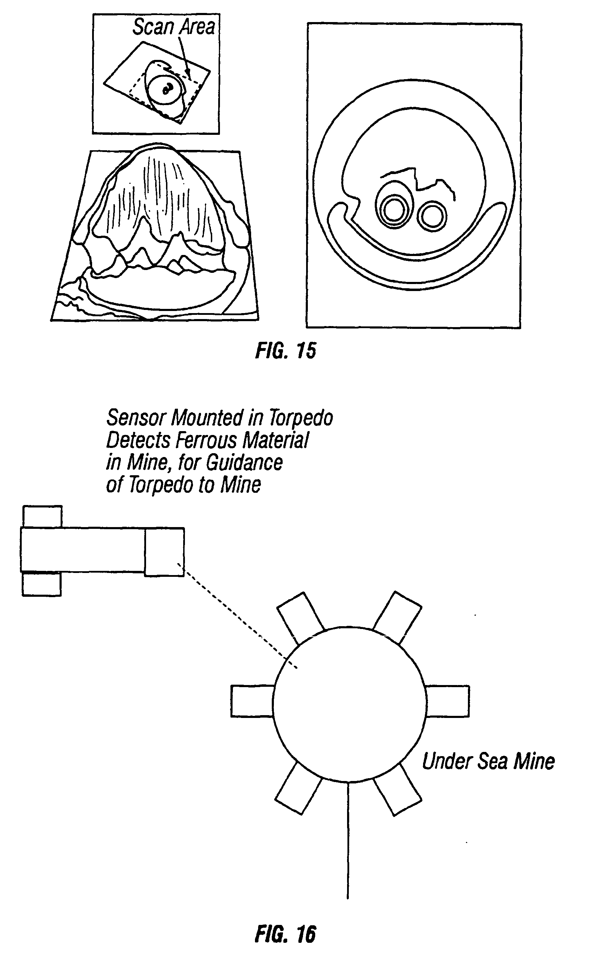

Fig. 15 shows an image of a corrosion test sample provided by the Federal Aviation Administration, Nondestructive Inspection Validation Center (FAA/AANC). The sample is a 0.06" thick, 2024T3 plate with a nominal 10% uniform mass loss corrosion region on one side. The image corresponds to a scan performed on the side opposite the corroded region. The boundary of the corroded region, as well as the pitting within the corroded region is sharply defined in the image and the signal-to-noise ratio in excess of 100 for these features.

A fusion of magnetic vision (MV) and other types of machine vision is useful for applications such as sorting metals or locating defects. Information from both types of images, taken together, can be the only effective way to provide the total amount of information needed of complete analysis. The images from a MV system and an optical system (for example) can be put together (fused) in software. The optical image might, for example, detect the full shape or color or differentiate plastic from metal. The MV system might, for example, provide detailed information about the metal parts, not possible with the optical vision system by itself. The optical system would identify materials such as plastic that the MV system would not be able to detect at all. The fusion of the two data sets would provide more information than either alone, and would be necessary for some applications.

Detection of Conductive Materials

The present invention also provides a magnetometer (see Fig. 16) for detecting conductive materials either on the surface or underneath other materials such as earth or water (e.g., mines). This sensor is handheld or operated from a vehicle or aircraft. It operates in a DC detection mode or with oscillating magnetic fields. Permanent magnets or flux concentrators are used to enhance the signal detected by the sensor.

This type of sensor may be used to locate ships, submarines, and other vessels. It can also be used to detect electrical currents flowing through PCB traces or IC components. It can be used to measure the amplitude of electrical currents. It can also be used to detect breaks in electrical conductors which would result in low or non-existent current flow. As such, it can be used for inspection of many types of circuitry and wiring.

Impact Sensing

GMR sensors are magnetorestrictive. During impact such sensors are compressed and will output a signal characteristic of impact.

Magnetic Field Tracking for Guidance

GMR sensors according to the invention may also be used for more sophisticated means of guidance of ordnance. A sensor can use a map of local magnetic fields to determine position and direction of a munition or any moving object such as an aircraft or truck. Flying objects may be detected by looking for response to an emitted electromagnetic field (active sensing) or looking for eddy currents output by aircraft as they traverse the earth's magnetic field (passive sensing).

Although the invention has been described in detail with particular reference to these preferred embodiments, other embodiments can achieve the same results. Variations and modifications of the present invention will be obvious to those skilled in the art and it is intended to cover in the appended claims all such modifications and equivalents. The entire disclosures of all references, applications, patents, and publications cited above are hereby incorporated by reference.

**Claims**

1. A magnetic field sensing system for locating defects in two or three dimensions in objects, said system comprising a sensor comprising a magnetoresistance detector and a sensor operable at a plurality of frequencies.

2. The system of claim 1 wherein said sensor provides for sensing defects at a plurality of depths in the objects.

3. The system of claim 1 wherein the objects are printed drcuit boards.

4. The system of claim 1 additionally comprising an analyzer for performing a function selected from the group consisting of determining type of defect, determining volume lost to defect, determining depth of defect, imaging the defect, determining dimensions of defect, and producing Lissajous plots of amplitude versus phase for magnetic fields.

5. A magnetic field sensing system for locating defects or features in objects comprising an array of magnetoresistance detectors.

6. The system of claim 5 wherein said detectors comprise an area between approximately 1 square micron to approximately 250 square microns.

7. The system of claim 6 with the ability to detect defects or features less than approximately 100 microns in size.

8. The system of claim 5 wherein the detectors comprise tunnel junction magnetoresistance sensors.

9. A magnetic field sensing system for medical imaging, said system comprising a sensor comprising at least one magnetoresistance detector and optionally additionally comprising an analyzer for performing a function selected from the group consisting of measuring electromagnetic activity in a patient's heart, measuring electromagnetic activity in a patient's brain, performing biomagnetics analysis, performing nuclear magnetic resonance imaging, and imaging skin defects.

10. A magnetometer comprising a sensor comprising a magnetoresistance detector and optionally additionally comprising an analyzer for performing a function selected from the group consisting of detecting conductive materials on a surface, detecting conductive materials beneath a surface, detecting conductive materials in a body of liquid, locating naval vessels, detecting electrical currents flowing through printed circuit board traces, detecting electrical currents flowing through integrated circuit components, measuring amplitudes of electrical currents, and detecting breaks in electrical conductors, and optionally comprising at least one permanent magnet and/or flux concentrator, and optionally operating in a mode selected from the group consisting of DC detection mode and employing oscillating magnetic fields.

**11.** A magnetic field sensing system for imaging objects comprising a magnetoresistance detector, a non-magnetic imager, and an analyzerto analyze images produced by both said magnetoresistance detector and said non-magnetic imager, optionally wherein said non-magnetic imager comprises an optical imager.

**12.** A system for mechanical device identification comprising at least one magnetoresistance detector.

**13.** The system of claim 12 wherein said device is a vehicle.

**14.** The system of claim 12 additionally comprising an analyzerto analyze output of said magnetoresistance detector and compare results to known characteristics of items selected from the group consisting of: perturbations of the earth's field by a moving metallic object or vehicle; fields associated with electric motors; fields associated with generators and alternators; fields associated with spark plugs, wires and coils; fields related to rapidly moving metallic parts; and fields associated with large masses of metals.

**15.** The system of claim 12 wherein said magnetoresistance detector detects perturbations of the earth's magnetic field by the mechanical device.

**16.** The system of claim 12 wherein said magnetoresistance detector detects magnetic fields generated by components of the mechanical device.

**17.** The system of claim 16 wherein said magnetoresistance detector detects the amplitude and frequency of the magnetic fields.

**18.** The system of claim 16 further comprising means to determine the location of said components within said mechanical device.

**19.** The system of claim 12 wherein said magnetoresistance detector detects radio waves generated by the mechanical device.

**20.** The system of claim 19 further comprising an analyzer to determine content of a signal comprising the radio waves.

**FIG. 1**

FIG. 2

Time (µs)

FIG. 3

**FIG. 4**

**FIG. 5**

FIG. 6

FIG. 7

ARMING CONFIGURATION

Hyperterminal

RS-232 Bus

Laptop Computer

RS-232 Converter

Serial Bus

Spin Sensor/Data
Recorder and Battery
Assy.

**FIG. 8**

EP 1 467 218 A2

**FIG. 9**

**FIG. 10**

FIG. 11

FIG. 12

19

**FIG. 13**

**FIG. 14**

EP 1 467 218 A2

**FIG. 15**

Sensor Mounted in Torpedo
Detects Ferrous Material
in Mine, for Guidance
of Torpedo to Mine

Under Sea Mine

**FIG. 16**

FIG. 17

FIG. 18

SIDEVIEW OF MAGNETIC FIELD SENSOR ARRAY(BOTTOM)
WITH MAGNETIC FIELD GENERATOR (TOP)

DISPLAY OF MAGNETIC FIELD IMAGE OF HIDDEN
DEFECTS ALONG WITH SPATIAL MAKERS FOR
LOCATION OF DEFECT

NON-CONTACT IMAGING

CROSS SECTION OF A LAPJOINT
WITH TWO HIDDEN DEFECTS

THE DATA CONNECTION MAY BE
HARDWIRED OR WIRELESS

COMPUTER

TOP VIEW

2-D ARRAY OF GMR SENSORS

MAGNETIC FIELD GENERATOR

PCB

SUPPORT CIRCUITRY

**FIG. 19**

EP 1 467 218 A2